# EUROPÄISCHE PATENTSCHRIFT

(11) **EP 1 558 975 B1**
(45) Veröffentlichungstag und Bekanntmachung des Hinweises auf die Patenterteilung: **31.12.2008**
(21) Anmeldenummer: 03810431.1
(22) Anmeldetag: 03.11.2003
(51) Int. Cl.: G05B 19/05, G05B 19/042

(54) **VERFAHREN ZUR OFFLINE-PARAMETRIERUNG EINES FELDGERÄTES DER PROZESSAUTOMATISIERUNGSTECHNIK**
METHOD FOR THE OFFLINE PARAMETERISATION OF A FIELD APPLIANCE USED IN PROCESS AUTOMATION TECHNOLOGY
PROCEDE DE PARAMETRAGE HORS LIGNE D'UN APPAREIL DE TERRAIN DE LA TECHNIQUE D'AUTOMATISATION DES PROCESSUS

(30) Priorität: 04.11.2002 DE 10251503
(43) Veröffentlichungstag der Anmeldung: 03.08.2005
(73) Patentinhaber: Endress + Hauser Flowtec AG, 4153 Reinach (CH)
(72) Erfinder: SEGER, Andrea, 79669 Zell im Wiesental (DE); VON STEIN, Bert, 79669 Zell im Wiesental (DE)
(74) Vertreter: Andres, Angelika Maria
(86) Internationale Anmeldenummer: PCT/EP2003/012244
(87) Internationale Veröffentlichungsnummer: WO 2004/042482

(56) Entgegenhaltungen:
- DE-A- 10 021 698
- DE-A- 10 131 530
- DE-A- 19 543 826

## Beschreibung

Die Erfindung betrifft ein Verfahren zur Offline-Parametrierung eines Feldgerätes der Prozessautomatisierungstechnik gemäß dem Oberbegriff des Anspruchs 1.

Druckschrift DE 101 31 530 zeigt ein Verfahren, bei dem mittels eine Konfigurators ein Feldgerät offline parametriert werden kann.

In der Prozessautomatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massendurchflussmesser, Druckmesser, Temperaturmesser etc, die als Sensoren die entsprechenden Prozessvariablen Füllstand, Massedurchfluss, Druck bzw. Temperatur erfassen und sogenannte Aktoren, die z. B. als Ventile den Durchfluss einer Flüssigkeit in einem Rohrleitungsabschnitt oder Pumpen im Füllstand eines Mediums in einem Behälter steuern.

Feldgeräte sind häufig über entsprechende Kommunikationsverbindungen, in der Regel über einen Feldbus, mit einer Steuereinheit (z.B.Speicherprogrammierbaren Steuerung SPS) verbunden, die den Prozessablauf steuert. In dieser Steuereinheit werden die Messwerte der verschiedenen Sensoren ausgewertet und die entsprechenden Aktoren angesteuert.

Meist ist der Feldbus noch mit einem übergeordnete Kommunikationsnetzwerk verbunden, das zur Datenkommunikation mit einem Leitsystem (Siemens Simatic S7, Fisher-Rosemount Delta V, ABB Symphonie) und ev. auch mit Business-Systemen (z.B. SAP R/3) dient.

Im Leitsystem wird der Prozessablauf überwacht und visualisiert.

Vom Leitsystem aus ist auch ein direkter Zugriff zum Bedienen, Parametrieren oder Konfigurieren einzelner Feldgeräte ermöglicht. Durch diesen Zugriff können spezielle Einstellungen (z. B. Parameter) an den Feldgeräten geändert werden oder Diagnosefunktionen aufgerufen werden.

Neben dem Zugriff über das Leitsystem, ist auch ein zeitweiliger Zugriff vor Ort z. B. über ein Bediengerät wie tragbarer Personal Computer (Laptop) oder ein tragbares Handbediengerät (Handheld) möglich. Die auf den Bediengeräten oder in den Leitsystemen installierten Bedienprogramme werden auch als Bedienwerkzeuge oder Bedientools bezeichnet.

In der Vergangenheit hatte jeder Feldgerätehersteller entsprechende Bedienwerkzeuge, zur Bedienung seiner Feldgeräte entwickelt. Dies führte zu einer Vielfalt von unterschiedlichen Bedienwerkzeugen auf dem Markt. Da moderne Bedienwerkzeuge nicht nur die Bedienung eigener Feldgeräte sondern auch die fremder Hersteller ermöglichen sollen, muss dem jeweiligen Bedienwerkzeug die Funktionalität des zu bedienenden Feldgerätes bekannt gemacht werden. Die Funktionalität eines Feldgerätes wird normalerweise mittels einer Gerätebeschreibung beschrieben. Hierbei stehen spezielle standardisierte Gerätebeschreibungssprachen zur Verfügung. Beispiele sind CAN-EDS Controll Area Network-Electronic Data Shield, HART-DDL, HART Device Descriptions Language, FF-DDL (Fieldbus Foundation-Device Descriptions Language, Profibus-GSD, Profibus-Gerätestammdaten), Profibus-GSD (Profibus-Gerätestammdaten), Profibus-EDD (Profibus-Electronic Device Descriptions).

Die Datenübertragung zwischen den Feldgeräten und den Leitsystemen erfolgt nach den bekannten internationalen Standards für Feldbusse, wie z. B. HART^{®}, Foundation Fieldbus FF, Profibus, CAN, etc.

Wie bereits erwähnt können mit einem entsprechenden Bedienprogramm die Parameter der einzelnen Feldgeräte abgeändert werden.

Beispiele für derartige Parameter sind Messbereich, Grenzwerte, Einheiten, etc.

In der Regel ist das Feldgerät, das bedient werden soll, mit dem Rechnersystem (Bediengerät, Leitsystem) auf dem das Bedienprogramm installiert ist, physikalisch über den Datenbus verbunden. Während der Bedienung ist eine Kommunikation zwischen Bedienprogramm und Feldgerät möglich. Dies bezeichnet man auch als Online-Bedienung. Die Parameter werden aus dem Feldgerät ausgelesen und direkt nach der Änderung zum Feldgerät übertragen und in diesem abgespeichert. Dabei werden die Abhängigkeiten zwischen Parametern unmittelbar berücksichtigt. Eine Änderung eines Parameters kann die Änderung weiter Parameter zur Folge haben oder die Sichtbarkeit eines Parameters ändern oder den Gültigkeitsbereich eines Parameters ändern. Hierzu ein Beispiel: Wird der Parameter "Totaliser Reset" auf "ja" gesetzt, so wird im Feldgerät die Aktion "Setze Parameter TotSum auf 0" ausgelöst. Die entsprechende Gerätebeschreibung für den Online-Betrieb lautet: Nach dem Schreiben von TotReset Lese den Parameter TotSum aus. Das Gerät setzt dabei TotSum auf 0 und gibt den gewünschten Wert aus.

Neben der Online-Bedienung ist aber auch eine Offline-Bedienung erwünscht, d. h. wenn während des Bedienvorgangs keine Kommunikation mit dem Feldgerät stattfinden kann; sei es, dass das entsprechende Feldgerät zum Zeitpunkt des Bedienens nicht mit dem Datenbus verbunden ist oder es momentan wichtige Prozess-Funktionen ausführt, die nicht unterbrochen werden sollen. Eine derartige Offline-Parametrierung ist z. B. mit dem Bedienprogramm CommunWin® der Firma Endress + Hauser möglich.

Um eine Offline-Parametrierung eines bestimmten Feldgerätes zu ermöglichen, ist es notwendig, entweder eine bereits existierende Gerätebeschreibung für dieses Feldgerät zu erweitern, die zusätzlich das Offline-Verhalten dieses Feldgerätes beschreibt oder eine neue Gerätebeschreibung zu erstellen, die das Offline-Verhalten dieses Feldgerätes umfasst. Für einfache Feldgeräte ist dies ohne weiteres möglich. Für Feldgeräte, die eine umfangreiche Funktionalität besitzen und deshalb eine Vielzahl von Parametern mit entsprechenden Abhängigkeiten aufweisen, ist dies jedoch nicht ohne einen erheblichen Programmieraufwand möglich. Insbesondere Wertezuweisungen für Variable und Berechnungen sind sehr schwierig zu beschreiben. Häufig ist es auch gar nicht möglich, das Offline-Verhalten eines komplexen Feldgerätes vollständig mit einer der bekannten Gerätebeschreibungssprachen zu beschreiben. Aufgrund des hohen Programmieraufwandes ist z.B. eine Offline-Parametrierung bei Feldgeräten der PNG-Serie von Endress+Hauser® momentan nicht möglich.

Aufgabe der Erfindung ist es deshalb ein Verfahren zur Offline-Parametrierung eines Feldgerätes der Prozessautomatisierungstechnik anzugeben, das keinen großen Programmieraufwand benötigt und das einfach und kostengünstig durchführbar ist.

Gelöst wird diese Aufgabe durch das in Anspruch 1 angegebene Verfahren. Die wesentlich Idee der Erfindung besteht darin, dass bei der Offline-Parametrierung das Bedienprogramm nicht mit dem Gerätesoftwareprogramm, das auf einem Mikroprozessor im Feldgerät abläuft, kommuniziert sondern mit einer auf einer separaten Rechnereinheit ablaufenden Kopie des Gerätesoftwareprogramms und somit eine Gerätebeschreibung, die das spezielle Offline-Verhalten des Feldgerätes beschreibt, nicht notwendig ist, da das Bedienprogramm quasi ein Online-Feldgerät sieht.

In einer Weiterentwicklung der Erfindung sind Bedienprogramm und die Kopie des Gerätesoftwareprogramms auf einer Rechnereinheit installiert. Somit können beide Programme zusammen z.B. auf einem Laptop ausgeführt werden, ohne dass der Anwender dies bei der Ausführung des Bedienprogramms bemerkt.

In vorteilhafter Weise sind das Bedienprogramm und die Kopie des Gerätesoftwareprogramms über eine virtuelle Schnittstelle COM-Schnittstelle miteinander verbunden.

In vorteilhafter Weise weist das Bediengerät eine Windows®-Plattform auf. Hierfür wird eine einfach zu programmierende Windows®-Hülle für das Gerätesoftwareprogramm benötigt.

Nachfolgend ist die Erfindung anhand eines in der Zeichnung dargestellten Ausführungsbeispiels näher erläutert.

Es zeigen:
Fig. 1 Prinzipdarstellung einer Anlage der Prozessautomatisierungstechnik.
Fig. 2 Schematischer Aufbau eines Feldgerätes
Fig. 3 Datenbus mit mehreren Feldgeräten

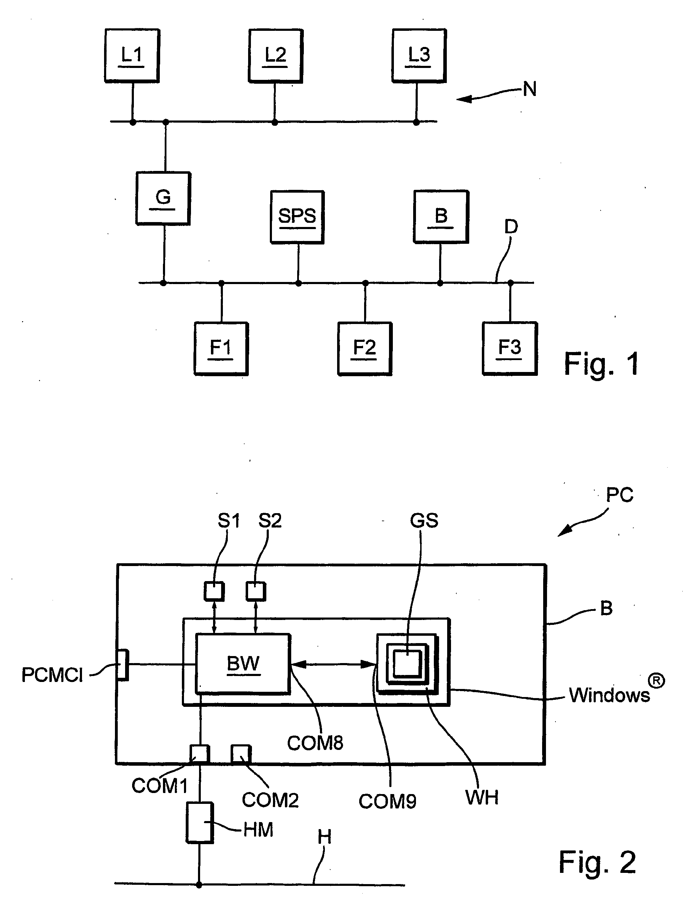

Die in Fig. 1 dargestellte Automatisierungsanlage zeigt eine Speicherprogrammierbare Steuerung SPS, die über einen Datenbus D mit mehreren Feldgeräten F1, F2, F3, etc. verbunden ist. Bei den Feldgeräten F1, F2, F3 kann es sich z. B. um Druckmesser, Temperaturmesser oder Durchflussmesser, etc. handeln. Die Feldgeräte F1, F2, F3 sind "intelligente" Feldgeräte mit entsprechenden Mikroprozessoren, in denen die jeweiligen Gerätesoftwareprogramme, die die Funktionalität der Feldgeräte bestimmen, ablaufen.

Die Steuerung SPS kommuniziert über den Datenbus D mit dem jeweiligen Feldgerät. So können Daten zwischen den Feldgeräten F1, F2, F3 und der Steuerung SPS übertragen werden.

Die Datenkommunikation auf dem Datenbus erfolgt nach den entsprechenden internationalen Standards wie CAN, Profibus, HART^{®} oder FF.

An den Datenbus D ist eine Bediengerät B angeschlossen, auf dem ein Bedienprogramm (z.B. FiefdTool® von der Firma Endress+Hauser) installiert ist.

Der Datenbus D, der den sogenannten Feldbus darstellt, ist über ein Gateway G mit einem übergeordneten Firmennetzwerk N verbunden. An das Firmennetzwerk N sind verschiedenen Leitsysteme L1 (SCADA), L2 (Visualisierung) und L3 (Engineering) angeschlossen. Das übergeordnete Firmennetzwerk N umfasst auch eine Netzwerkverbindung zu Business-Systemen wie z.B. SAP R/3.

In Figur 2 ist der Aufbau der Bediengeräts B näher dargestellt. Im vorliegenden Fall handelt es sich bei der Bediengerät B um einen Personal-Computer PC (Laptop), der im wesentlichen zwei externe COM-Ports COM1 und COM 2 und ein PC-Kartenfach PCMCI z.B. für eine Profibus®-Interface-Karte aufweist. Die weiteren üblichen externen Komponenten eines PCs wie Tastatur Bildschirm etc. sind der Übersichtlichkeit halber nicht dargestellt.

Über die COM-Ports bzw. die Interface-Karte kann das Bediengerät mit den verschiedenen Datenbussen verbunden werden. In dargestellten Fall ist der COM1-Port COM1 über ein HART^{®}-Modem HM mit einem HART^{®}-Bus H verbunden.

Auf dem Personal-Computer PC ist ein Bedienprogramm B und ein Gerätesoftwareprogramm GS installiert, die beide z.B. unter dem Betriebssystem Windows® lauffähig sind. Das Bedienprogramm B ist mit einem Speicher S1, der Gerätebeschreibungen für verschiedene Feldgeräte zur Verfügung stellt und einem Speicher S2 zum Abspeichern von Parameterwerten, verbunden. Es weist eine virtuelle Schnittstelle COM8 auf, die mit einer virtuellen Schnittstelle COM9 des Gerätesoftwarprogramm verbunden ist. Das Gerätesoftwarprogramm GS ist eine Kopie der im Feldgerät ablaufenden Software. Diese Software wird auch als "Embedded Software" bezeichnet. Damit diese Software unter Windows lauffähig ist, ist das Gerätesoftwarprogramm GS von einer Windows-Hülle WH umgeben.

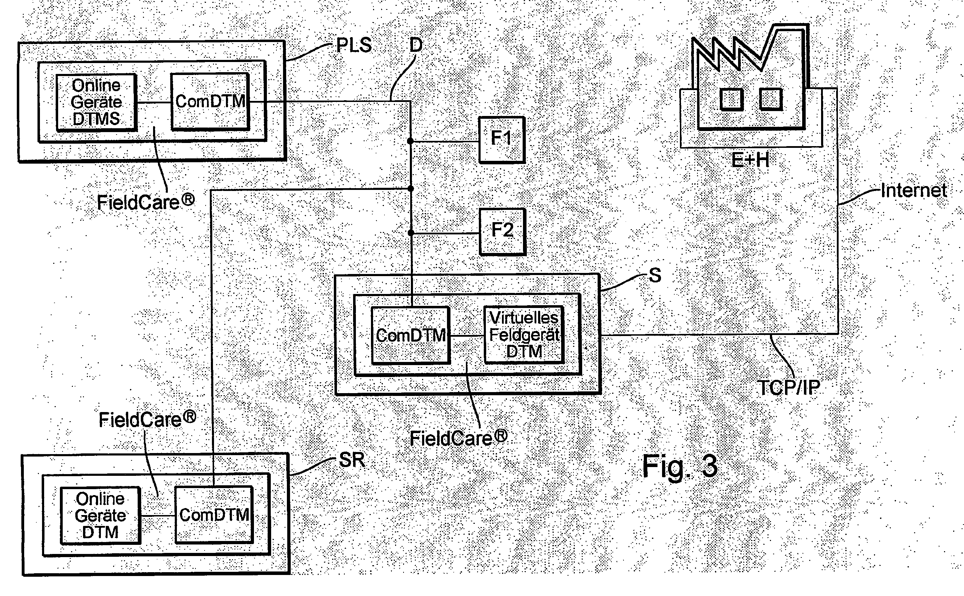

In Fig. 3 ist ein Datenbus D dargestellt, an den zwei Feldgeräte F1, F2 ein Prozessleitsystem PLS, ein Service-Rechner SR und ein Server-Rechner S angeschlossen sind. Als Rahmenapplikation auf den Rechnern PLS, SR und S dient jeweils das Bedienprogramm FieldCare® der FA. Endress+Hauser, das nach dem FDT/DTM-Standard arbeitet. Die FDT Spezifikationen sind als Profibus-Richtlinien Order No.: 2,162 in der Version 1.2 verfügbar.

Im Prozessleitsystem PLS und im Service-Rechner SR sind als Gerätebeschreibungen die Gerätetreiber F1-DTM, F2-DTM und ein COM-DTM verfügbar. Der Gerätetreiber F1-DTM gehört zum Feldgerät F1, der Gerätetreiber F2-DTM zum Feldgerät F2. Der COM-DTM ist für die Kommunikation mit dem Datenbus D zuständig.

Auf dem Server S ist ein COM DTM und ein virtueller Gerätetreiber VF-DTM, für ein bestimmtes Feldgerät F3 verfügbar.

Dies bedeutet, dass mit dem Datenbus D zwei online Feldgeräte F1 und F2 verbunden sind. Das Feldgeräte F3 ist nicht physikalisch mit dem Datenbus D verbunden, es wird durch den virtuellen Gerätetreiber VF-DTM simuliert. Weiterhin ist der Server-Rechner S über eine Internet-Verbindung mit dem Gerätehersteller E+H des Feldgeräts F3 verbunden.

Nachfolgend ist das erfindungsgemäße Verfahren zur Offline-Parametrierung am Beispiel des Feldgerätes F1 näher erläutert.

Auf einer Benutzeroberfläche des auf dem Bediengerät ablaufenden Bedienprogramms wählt der Anwender das zu bedienende Feldgeräte F1 und den Bedienmodus Offline-Parametrierung aus. Bei der Auswahl Online-Modus wäre über die entsprechende Schnittstelle COM1, COM2 oder die Interface-Karte eine direkte Kommunikation mit dem Gerätesoftwareprogramm GS, das auf dem Mikroprozessor des Feldgerätes F1 ausgeführt wird, möglich.

Das Bedienprogramm B kommuniziert im Offline-Modus über die COM8 und COM9 Schnittstelle mit einer Kopie des Gerätesoftwareprogramms GS und sieht so quasi das Feldgerät F1, als ob es Online wäre. Das Orginal des Gerätesoftwareprogramm GS läuft normalwerweise auf einem Mikroprozessor im Feldgerät F1 ab. Der Anwender kann nun in gewohnter Weise die Parameteränderungen vornehmen. Die Parameteränderungen werden unter Berücksichtigung der Abhängigkeiten im Speicher S2 gespeichert und sobald eine Kommunikation mit dem Feldgerät F1 über den Feldbus wieder möglich ist, nach einer Bestätigung durch den Anwender (geänderte Parameter Download ja/nein) zum Feldgerät F1 übertragen und in diesem abgespeichert.

Da das Gerätesoftwareprogramm GS auch eine COM1 Schnittstelle aufweist, könnten Bedienprogramm B und Gerätesoftwareprogramm GS auch auf zwei getrennten Rechnereinheiten, die über ein Nullmodemkabel verbunden sind, ablaufen.

Für den Fall, dass das Feldgerät F1 dem Bedienprogramm noch nicht bekannt ist, wählt der Anwender aus einem Menü, Hersteller und Type des Feldgerätes F1 aus, so dass die entsprechende Gerätebeschreibung aus dem Speicher S1 oder alternativ z.B. per Diskette geladen werden kann. Das erfindungsgemäße Verfahren ist deshalb so kostengünstig, weil die Gerätesoftware (Embedded Software) unabhängig von der Offline-Parametrierung auf einem PC entwickelt und getestet wird und somit die entsprechenden Programme ohnehin zur Verfügung stehen.

Denkbar ist auch das Gerätesoftwareprogramm GS nicht mit einer Window-Hülle zu umgeben, sondern mit einer DTM Hülle, gemäß dem FDT/DTM Standard.

Gerätesoftware GS und FDT-Hülle bilden zusammen einen virtuellen Feldgeräte DTM, der im Folgenden als VF-DTM bezeichnet wird. Ein solcher virtueller Gerätetreiber VF-DTM kann in einfacher Weise in FDT-Rahmenanwendungen (FDT frame applications) wie z. B. FieldCare® der Fa. Endress+Hauser eingebunden werden. Zusammen mit einem normalen Geräte DTM, der keine offline Funktionalität besitzt, kann so ein zugehöriges Feldgerät vollständig offline bedient werden. Zur Offline-Parametrierung kommuniziert der Geräte DTM dann nicht mit dem realen Feldgerät, sondern mit dem virtuellen Gerätetreiber VF-DTM.

Über einen entsprechenden Kommunikations-DTM COM-DTM kann man mit einem virtuellen Gerätetreiber VF-DTM ein Feldgerät VF am Datenbus D quasi simulieren.

So kann z. B. eine Anlage mit mehreren realen Feldgeräten und einem oder mehreren virtuellen Feldgeräten im Rahmen einer Projektierung vollständig parametriert werden. Hierbei können auch Messstellenbezeichnungen TAG-Nummern und Busadressen für noch nicht an den Bus angeschlossene Feldgeräte vergeben werden. Das Bedienprogramm B kommuniziert bei den nicht an den Datenbus angeschlossenen Feldgeräten einfach mit den entsprechenden virtuellen Gerätetreibern VF-DTMs.

In einer speziellen Weiterentwicklung der Erfindung werden diese Informationen (TAG-Nummern und Busadressen) direkt an den Feldgerätehersteller weitergeleitet, um dort die Feldgeräte bereits beim Fertigungsprozess vorzukonfigurieren.

Der Anwender kann dann die Feldgeräte sofort nach ihrer Auslieferung am Datenbus D einsetzen.

Die wesentliche Idee der Erfindung besteht darin, dass zur Offline-Parametrierung eines Feldgerätes, das entsprechende Bedienprogramm B mit einer Kopie des Gerätesoftwareprogramms GS kommuniziert, die auf einer vom Feldgerät unabhängigen Rechnereinheit abläuft.

### Bezugszeichenliste

Speicherprogrammierbare Steuerung SPS
Feldgeräten F1, F2, F3
Datenbus D
Gateway G
Firmennetzwerk N
Leitsysteme L1 (SCADA) L2 (Visualisierung) L3 (Engineering)
Bediengerät B
COM-Ports COM1 und COM 2
PC-Kartenfach PCMCI
HART®-Modem HM
HART®-Bus H
Speicher S1
Bedienprogramm B
Gerätesoftwareprogramm GS'
Kopie Gerätesoftwareprogramm GS
Speicher S2
Schnittstelle COM8
Schnittstelle COM9
Windows-Hülle WH

## Patentansprüche

1. Verfahren zur Offline-Parametrierung eines Feldgerätes der Prozessautomatisierungstechnik mit Hilfe eines auf einem Bediengerät B ablaufenden Bedienprogramms B, das zur Online-Parametrierung mit dem Feldgerät F1 über einen Datenbus D kommuniziert und dem keine Gerätebeschreibung zur Verfügung steht, die das Offline-Verhalten des Feldgerätes F1 beschreibt,
**dadurch gekennzeichnet, dass** bei der Offline-Parametrierung das Bedienprogramm B mit einer auf einer separaten Rechnereinheit ablaufenden Kopie des im Feldgerät F1 ablaufenden Gerätesoftwareprogramms GS kommuniziert und **dadurch** ein Online Feldgerät F1 simuliert wird.

2. Verfahren nach Anspruch 1, **dadurch gekennzeichnet, dass** die Kopie des Gerätesoftwareprogramms GS und das Bedienprogramm B gemeinsam auf dem Bediengerät B ausgeführt werden.

3. Verfahren nach einem der vorhergehenden Ansprüche, **dadurch gekennzeichnet, dass** die Kopie des Gerätesoftwareprogramms GS und das Bedienprogramm B über eine virtuelle COM-Schnittstelle kommunizieren.

4. Verfahren nach einem der vorhergehenden Ansprüche, **dadurch gekennzeichnet, dass** die Kopie des Gerätesoftwareprogramms GS 50 umgeben wird, dass das Gerätesoftwareprogramm GS unter dem Betriebssystem Windows^{®} lauffähig ist.

5. Verfahren nach einem der Ansprüche 1-3, **dadurch gekennzeichnet, dass** die Kopie des Gerätesoftwareprogramms GS 50 umgeben wird, dass das Gerätesoftwareprogramm GS Teil eines virtuellen Feldgeräte DTM bildet.

6. Verfahren nach einem der vorhergehenden Ansprüche, **dadurch gekennzeichnet, dass** als Bediengerät B eine Laptop-Rechnereinheit genutzt wird.

7. Verfahren nach einem der vorhergehenden Ansprüche, **dadurch gekennzeichnet, dass** Parametrierungseinstellungen der Offline-Parametrierung zur Vorkonfigurierung von Feldgeräten an den Feldgerätehersteller übertragen werden.

## Claims

1. Method for configuring a process engineering field device offline with the aid of an operating program B running on an operating device B, said operating program communicating with field device F1 via a data bus D for the purposes of online configuration and not having a device description that describes the offline behavior of the field device F1, **characterized in that**, during offline configuration, the operating program B communicates with a copy of the device software program DS running on the field device F1, said copy running on a separate computer unit, where an online field device F1 is simulated as a result.

2. Method as per Claim 1, **characterized in that** the copy of the device software program DS and the operating program B are both executed on the operating device B.

3. Method as per one of the previous Claims, **characterized in that** the copy of the device software program DS and the operating program B communicate by means of a virtual COM interface.

4. Method as per one of the previous Claims, **characterized in that** the copy of the device software program DS is enclosed in such a way that the device software program DS can be executed on the Windows® operating system.

5. Method as per one of the Claims 1-3, **characterized in that** the copy of the device software program DS is enclosed in such a way that the device software program DS forms a part of a virtual field device DTM.

6. Method as per one of the previous Claims, **characterized in that** a laptop computer unit is used as the operating device B.

7. Method as per one of the previous Claims, **characterized in that** configuration settings from the offline configuration are transmitted to the field device manufacturer for the purpose of preconfiguring field devices.

## Revendications

1. Procédé destiné au paramétrage hors ligne d'un appareil de terrain de la technique d'automatisation des process à l'aide d'un programme d'exploitation B tournant sur un appareil de commande B, lequel programme communique via un bus de données D avec l'appareil de terrain F1 en vue du paramétrage en ligne, et qui ne dispose d'aucune description d'appareil décrivant le comportement hors ligne de l'appareil de terrain F1, **caractérisé en ce que** pour le paramétrage hors ligne, le programme d'exploitation B communique avec une copie, exécutée sur une unité d'ordinateur séparée, du logiciel d'appareil GS exécuté sur l'appareil de terrain F1, simulant ainsi un appareil de terrain F1 en ligne.

2. Procédé selon la revendication 1, **caractérisé en ce que** la copie du logiciel d'appareil GS et le programme d'exploitation B sont exécutés ensemble sur l'appareil de commande B.

3. Procédé selon l'une des revendications précédentes, **caractérisé en ce que** la copie du logiciel d'appareil GS et le programme d'exploitation B communiquent par le biais d'une interface COM virtuelle.

4. Procédé selon l'une des revendications précédentes, **caractérisé en ce que** la copie du logiciel d'appareil GS est enveloppée de telle manière que le logiciel d'appareil GS soit compatible avec le système d'exploitation Windows^{®}.

5. Procédé selon l'une des revendications 1 à 3, **caractérisé en ce que** la copie du logiciel d'appareil GS est enveloppée de telle manière que le logiciel d'appareil GS fasse partie d'un appareil de terrain DTM virtuel.

6. Procédé selon l'une des revendications précédentes, **caractérisé en ce qu'**un ordinateur portable est utilisé en tant qu'appareil de commande B.

7. Procédé selon l'une des revendications précédentes, **caractérisé en ce que** les réglages du paramétrage hors ligne sont transmis au fabricant des appareils de terrain en vue de la préconfiguration d'appareils de terrain.
